# EUROPEAN PATENT APPLICATION

(11) **EP 1 677 408 A1**
(43) Date of publication of application: **05.07.2006**
(21) Application number: 05028569.1
(22) Date of filing: 28.12.2005
(51) Int. Cl.: H02K 15/02, H02K 1/28

(54) **Rotor for rotating machine, manufacturing method of rotor and motor for electrically driven power steering**

(30) Priority: 28.12.2004 JP 2004380560
(71) Applicant: HITACHI, LTD., Chiyoda-ku Tokyo 100-8280 (JP)
(72) Inventor: Harada, Kouji, c/o Hitachi Ltd., IP Group, Chiyoda-ku Tokyo 100-8220 (JP); Mirumachi, Mitsuaki, Hitachinaka-shi Ibaraki 312-0062 (JP)
(74) Representative: Beetz & Partner

(57) **Abstract**

An object of the present invention is to provide a rotor with a high accuracy, a manufacturing method of the rotor (130) and a motor for an electrically driven power steering in a manner that the accuracy of a shaft itself is not degraded, a core is not applied with excessive deformation, and the shaft (138) and the core are joined while maintaining the accuracy of each of these parts. A rotor (130) is configured by a rotor core (132) which is formed by laminating a plurality of silicon steel plates and has a through hole at the center thereof, and a shaft (138) which is pressed into the through hole of the rotor core (132). The rotor core (132) is locally annealed only at a portion near the surface of the through hole.

## Description

### BACKGROUND OF THE INVENTION

### 1. Field of the Invention

The present invention relates to the rotor for a rotating machine and the motor for an electrically driven power steering.

### 2. Description of the Related Art

Generally, in the conventional rotor, a shaft subjected to the knurling processing by the rolling operation is pressed into and coupled with a rotor core, thereby securing the intensity with respect to the coming-off in the axial direction and the intensity in the rotation direction. However, the bakingmay occur upon the press-into operation depending on the hardness of the shaft and the hardness of the core, whereby there arise such problems that the coupling accuracy such as a coaxial accuracy degrades and the joint intensity varies.

In order to solve such a problem, there has been employed such a method that the shaft is subjected to the quench hardening thereby to harden the shaft than the core. However, since the shaft is usually thin in its axial diameter and long in its total length, the bend or the deformation of the outer diameter thereof due to the thermal processing occurs inevitably when the quench hardening is performed. As a result, there arises such a problem that the coupling accuracy degrades.

On the other hand, as a method of reducing the hardness of the core, there is a method of annealing the core entirely thereby to soften it as disclosed in JP-A-54-1803, for example.

### SUMMARY OF THE INVENTION

However, the method of annealing to soften the core entirely causes the following problem. That is, most of cores used inmotors etc. are formed in a manner that a thin steel plate is stamped by the pressing, then, for example, several hundreds of the stamped steel plates are laminated to form the core. When the laminated core is inserted into a heat processing furnace as it is and annealed, the rolling deformation caused at the time of manufacturing the steel plate and the processing deformation caused at the time of the press stamping the steel plate are released. Thus, although each stamped steel plate deforms slightly, accumulated deformation appears at the core when the several hundreds of the stamped steel plates are laminated. When the core thus deformed is joined to the shaft, there arises such a problem that the coaxial accuracy degrades and so sufficient rotation balance as the rotor can not be obtained thereby to generate noise and vibration.

Particularly, in the motor for an electrically driven power steering, since the vibration of the motor is transmitted to a steering and sensed by a driver, the vibration of the motor is desired to be lowered particularly.

An object of the present invention is to provide a rotor with a high accuracy, a manufacturing method of the rotor and the motor for an electrically driven power steering in a manner that the accuracy of a shaft itself is not degraded, then a core is not applied with excessive deformation, and the shaft and the core are joined while maintaining the accuracy of each of these parts..

The present invention intends to provide the rotor with a high accuracy, the manufacturing method of the rotor and the motor for an electrically driven power steering.

The most typical feature of the present invention is that a rotor core is locally annealed only at the area near the surface of a through hole thereof.

According to the present invention, each of the rotor and the motor for an electrically driven power steering can be fabricated with a high accuracy.

The rotor may include:
a rotor core which is formed by laminating a plurality of metal plates and has a through hole at the center thereof; and
a shaft which is pressed into the through hole of the rotor core, wherein
the rotor core is locally annealed only at an area near the surface of the through hole.

The method of manufacturing a rotor in a manner that a shaft is pressed into a rotor core which is formed by laminating a plurality of metal plates and has the through hole at a center thereof, may include the steps of:
punching each of the plurality of metal plates by a pressing process to form a plurality of metal plates each having a predetermined shape;
laminating the plurality of the metal plates of the predetermined shape to form the rotor core;
locally heating only at an area near the surface of the through hole passing through the center of the rotor core to a
recrystallization temperature of the rotor core or more to anneal the area; and
pressing the shaft into the through hole of the rotor core.

The representative best mode of a motor for an electrically driven power steering according to the invention is as follows. That is, the motor includes:
a stator; and
a rotor which is disposed so as to oppose to the stator through a gap and is supported rotatably, wherein
the rotor including:
   a rotor core which is formed by laminating a plurality of metal plates and has a through hole at the center thereof; and
   a shaft which is pressed into the through hole of the rotor core, wherein
   the rotor core is locally annealed only at an area near the surface of the through hole.

### BRIEF DESCRIPTION OF THE DRAWINGS

Fig. 1 is a transversal sectional view showing the configuration of a motor for an electrically driven power steering according to an embodiment of the invention;
Figs. 2A and 2B are sectional diagrams of the motor cut along a line A-A in Fig. 1;
Fig. 3 is a diagram showing the relation between the number P of poles and the number S of slots in an AC motor;
Figs. 4A and 4B are a diagram for explaining the actual measurement value of cogging torque in the motor for an electrically driven power steering according to the embodiment of the invention;
Fig. 5 is a diagram showing the coupling relation of the stator coils in the motor for an electrically driven power steering according to the embodiment of the invention;
Fig. 6 is a cross sectional diagram showing the configuration of the rotor used in the motor for an electrically driven power steering according to the embodiment of the invention;
Fig. 7 is an enlarged cross sectional diagram showing the configuration of the coupling portion between the core and the shaft of the rotor used in the motor for an electrically driven power steering according to the embodiment of the invention;
Fig. 8 is a diagram for explaining a local heating device for the rotor used in the motor for an electrically driven power steering according to the embodiment;
Fig. 9 is a perspective view of an induction heating coil which is used for the local heating of the rotor used in the motor for an electrically driven power steering according to the embodiment;
Fig. 10 is a diagram showing the temperature profile at the time of locally heating the rotor used in the motor for an electrically driven power steering according to the embodiment;
Fig. 11 is an explanatory diagram at the time of coupling the rotor used in the motor for an electrically driven power steering according to the embodiment;
Fig. 12 is a transversal sectional view showing the configuration of another example of the stator of the motor for an electrically driven power steering according to the embodiment of the invention; and
Fig. 13 is a diagram showing the system configuration of the electrically driven power steering using the motor for an electrically driven power steering according to the embodiment.

### DETAILED DESCRIPTION OF THE INVENTION

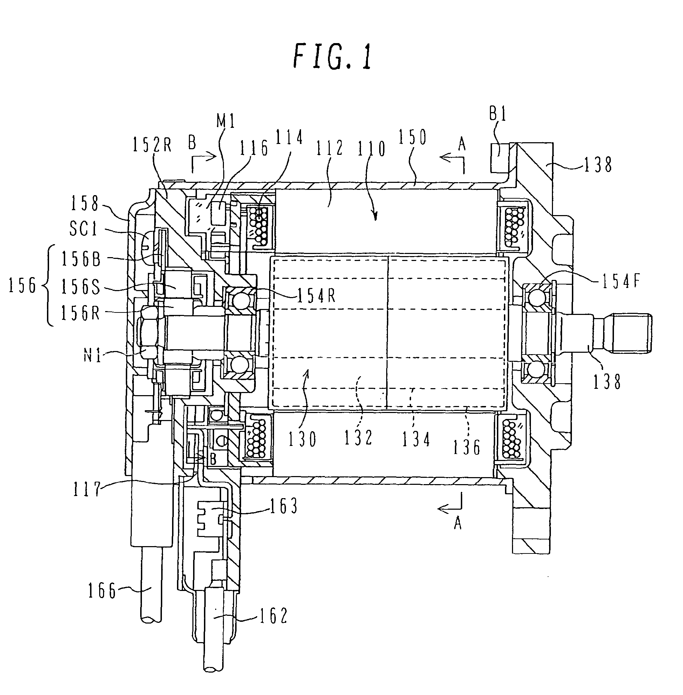

The configuration of the motor for an electrically driven power steering according to an embodiment of the present invention will be explained with reference to Figs. 1 to 7.

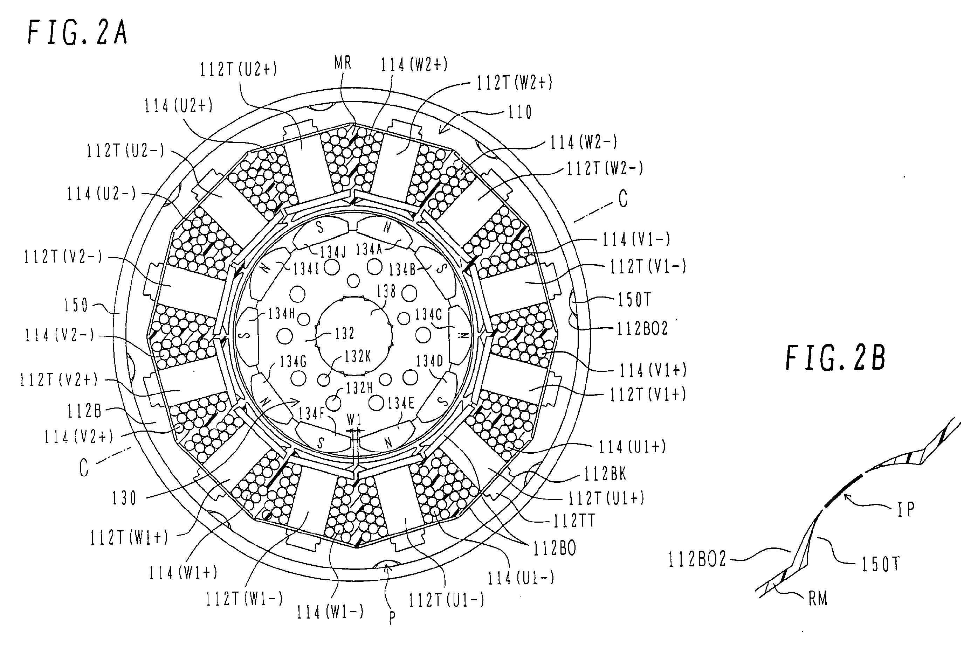

First, the configuration of the motor for an electrically driven power steering according to an embodiment will be explained with reference to Figs. 1 and 2.

Fig. 1 is a transversal sectional view showing the configuration of the motor for an electrically driven power steering according to the embodiment. Figs. 2A and 2B are sectional diagrams of the motor cut along a line A-A in Fig. 1, wherein Fig. 2A is the sectional diagram showing the entirety of the motor and Fig. 2B is the sectional diagram showing the main portion of the motor.

The EPS motor 100 for an electrically driven a power steering (hereinafter called an EPS motor) is a synchronous motor of a surface magnetic type which includes a stator 110 and a rotor 130 supported so as to be rotatable at the inside of the stator 110. The EPS motor 100 is driven by electric power supplied from a vehicle mounted power supply having a battery, for example, a 14 volt system power supply (output voltage of the battery is 12 volt), a 24 volt system power supply or a 42 volt system power supply (output voltage of the battery is 36 volt) or a 48 volt system power supply.

The stator 110 includes a stator core 112 configured by magnetic material which is formed by laminating silicon steel plates and stator coils 114 held within the slots of the stator core 112. As described later with reference to Fig. 2A, the stator core 112 is configured by an annular-shaped back core and a plurality of teeth which are fabricated separately from the back core and then mechanically fixed to the back core. The stator coils 114 are wound around the plurality of teeth. The stator coils 114 are wound in a distributed winding manner or a concentrated winding manner.

When the stator coils 114 are wound in the distributed winding manner, the motor is excellent in the weak magnetic field control and also in the generation of reluctance torque. The miniaturization of the motor and the reduction of the coil winding resistance are very important for the EPS motor. When the stator coils 114 are wound in the concentrated winding manner, the coil end length of the stator coil 114 can be made short, whereby the length of the EPS motor 100 in the rotation axis direction thereof can be made short. Further, since the coil end length of the stator coil 114 can be made short, the resistance value of the stator coil 114 can be made small, so that the temperature increase of the motor can be suppressed. Furthermore, since the resistance of the coil can be made small, the copper loss of the motor can also made small. Thus, a rate of energy consumed by the copper loss of the input energy to the motor can be made small and so a ratio of the output torque with respect to the input energy, that is, the efficiency can be improved.

As described above, the EPS motor is driven by the power supply mounted on a vehicle. Most of the power supplies are low in the output voltages. Coupling units such as switching elements constituting an inverter, the motor and a current supply circuit etc. are coupled between the terminals of the power supply so as to constitute a series circuit equivalently. In the series circuit, since the total of the terminal voltages of the respective constituent elements of the series circuit equals to the terminal voltage of the power supply, the terminal voltage of the motor for supplying a current to the motor becomes low. It is quite important to suppress the copper loss to a small degree in order to secure the current flowing into the motor in such a circumstance. In view of this matter, the most of the power supplies mounted on vehicles are low-voltage systems of 50 volt or less, and so it is desirable to wind the stator coils 114 in the concentrated winding manner. In particular, it is very important to suppress the copper loss in the case of using the 12 volt system power supply.

The EPS motor is placed near a steering column or a rack-and-pinion. In each case, the miniaturization of the motor is required. Further, it is necessary to fix the stator coil winding in the miniaturized structure and the facilitation of the winding procedure is also important. The concentrated winding is easier in the winding procedure and the fixing procedure of the coil winding as compared with the distributed winding.

The coil ends of the stator coils 114 are molded. The EPS motor is desired to suppress the torque fluctuations such as cogging torque to a quite small degree. Thus, the inner portion of the stator is sometimes cut or mulled again after assembling the stator. Cut or milled powder is generated due to the machining process such as the cutting or milling process. The coil end is desirably molded in order to prevent the cut or milled powder from entering into the coil end of the stator coil. The coil end represents portions of the stator coil 114 protruded in the axial direction from each of the both end portions in the axial direction of the stator core 112. In this embodiment, although a gap is provided between mold resin covering the coil ends of the stator coils 114 and a frame 150, the mold resin may be filled to the position contacting to the frame 150, a front flange 152F and a rear flange 152R. In this case, heat generated from the stator coils 114 is directly transmitted to the frame 150, the front flange 152F and the rear flange 152R through the mold resin and then radiated outside. Thus, the temperature increase of the stator coils 114 can be suppressed as compared with a case where heat is transmitted through the air.

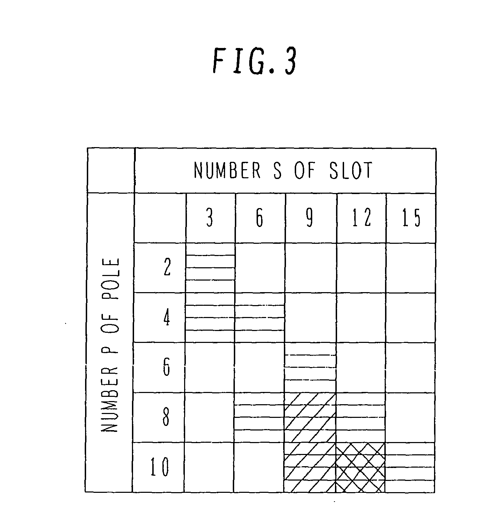

The stator coils 114 are constituted by three phases of a U-phase, a V-phase and a W-phase, in which each phase is constituted by a plurality of unit coils. As described later by using Fig. 3, the plurality of unit coils are coupled by a coupling ring 116 provided at the left side in the figure for each phase of the three phases. The coupling ring 116 is electrically coupled to a bus bar 117, which in turn is coupled to a power cable at the outside of the motor.

The EPS motor is required to generate a large torque. When the steering wheel (handle) is rotated at a high speed in a running stop state or a driving state close to the running stop state, for example, the motor is required to generate a large torque due to the friction resistance between the steered wheel and the ground. In this case, a large current is supplied to the stator coil. Although this current differs depending on the condition, there is a case where the current is more than 50 amperes. It is considered that there is a case where the current is 70 amperes or 150 amperes. In order to supply such a large current safely and reduce the heat generated by the current, it is very important to use the coupling ring 116 and the bus bar 117. Since the current is supplied to the stator coil through the coupling ring 116 and the bus bar 117,the coupling resistance can be made small and the voltage drop due to the copper loss can be suppressed. Accordinaly, a large current can be supplied easily. Further, the time constant of the rising of the current caused by the operation of the elements of the inverter can be made small advantageously.

The stator core 112 and the stator coils 114 are integrally molded and formed by the resin (electrically insulative resin) to constitute the stator SubAssy. The stator SubAssy thus integrally formed is subjected to the mold forming in a state that the stator is pressed into and fixed to the inside of the cylindrical frame 150 which is formed by metal such as aluminum. Incidentally, the stator SubAssy thus integrally formed may be subjected to the mold forming in a state that the stator coils 114 are built into the stator core 112 and then may be pressed into the frame 150.

The EPS motor mounted on an automobile is applied with various kinds of vibrations. The EPS motor is also applied with shocks from wheels. Further, the EPS motor is used in a state where the temperature changes largely. That is, it is considered that the EPS motor is used in a state of minus 40 °C or in a state of 100 °C ormore due to the temperature increase. Further, it is required not to make water enter into the motor. In order to fix the stator to a yoke in such a condition, it is desirable to press the stator SubAssy into the cylindrical metal of the cylindrical frame in which no hole other than screw holes is provided at least at the outer peripheral portion of the stator iron core. Further, after the press-into procedure, the frame may be screwed at the outer periphery thereof. It is desirable to perform the screwing in addition to the press-into procedure.

The rotor 130 includes a rotor core 132 configured by magnetic material which is formed by laminating silicon steel plates, magnets 134 each configured by a permanent magnet fixed to the surface of the rotor core 132 by means of adhesive agent, and a magnet cover 136 formed by non-magnetic material provided at the outer periphery of the magnets 134. The magnet 134 is rare earth magnet and made of neodymium, for example. The rotor core 132 is fixed to a shaft 138. The magnets 134 are fixed to the surface of the rotor core 132 by means of adhesive agent and the outer peripheral surface sides of the magnets are covered by a magnet cover 136, whereby the magnets 134 are prevented from being scattered. Although the magnet cover 136 is formed by a stainless steel (commonly called SUS), a tape may be wound around the outer peripheral surface sides of the magnets in place of the magnet cover. However, the stainless steel can be fabricated easier than the tape. As described above, the EPS motor is excellent in holding the permanent magnets which are subjected to large vibration and a quite large heat change and liable to break. Further, as described above, even if the permanent magnets break, the permanent magnets are prevented from scattering.

The front flange 152F is provided at the one end portion of the cylindrical frame 150. The front flange 152F is fixed to the frame 150 by means of a bolt B1. The rear flange 152R are pressed into the other end of the cylindrical frame 150. Bearings 154F and 154R are attached to the front flange 152F and the rear flange 152R, respectively. The shaft 138 and the stator 110 fixed to the shaft 138 are rotatably supported by these bearings 154F and 154R.

The front flange 152F is provided with a protruding portion (or an extended portion) of an annular shape. The protruding portion of the front flange 152F protrudes in the axial direction so as to extend on the coil end side from the side surface of the coil end side of the front flange 152F. The tip end portion of the protruding portion of the front flange 152F is arranged to be inserted into the gap formed between the frame 150 and the molding material of the coil end of the front flange 152F side when the front flange 152F is fixed to the frame 150. The protruding portion of the front flange 152F is preferably made in close contact with the molding material of the coil end of the front flange 152F side in order to improve the heat radiation efficiency from the coil end.

The rear flange 152R is provided with a cylindrical recess. The recess of the rear flange 152R is concentric with the center axis of the shaft 138 and enters into the inner side (the stator core 112 side) in the axial direction than the axial direction end portion of the frame 150. The tip end portion of the recess of the rear flange 152R extends to the inner diameter side of the coil end of the rear flange 152R side and opposes in the radial direction to the coil end of the rear flange 152R side. The bearing 154 is held at the tip end portion of the recess of the rear flange 152R. The axial direction end portion of the rear flange 152R side of the shaft 138 extends to the further outside (the side in opposite to the rotor core 132 side) in the axial direction than the bearing 154 and reaches a position near the opening portion of the recess of the rear flange 152R or a position protruding slightly outside in the axial direction from the opening portion.

A resolver 156 is disposed in a space formed between the inner peripheral surface of the recess of the rear flange 152R and the outer peripheral surface of the shaft 138. The resolver 156 includes a resolver stator 156S and a resolver rotor 156R and is positioned at the outer side (the side in opposite to the rotor core 132 side) in the axial direction than the bearing 154R. The resolver rotor 156R is fixed to the one end portion (the end portion on the left side in the figure) of the shaft 138 by means of a nut N1. The resolver stator 156S is fixed to the inner peripheral side of the recess of the rear flange 152Rwhen a resolver pressing plate 156B is fixed to the rear flange 152R by means of a screw SC1, whereby the resolver stator 156S opposes to the resolver rotor 156R through a gap. The resolver stator 156S and the resolver rotor 156R constitute the resolver 156. The resolver stator 156S detects the rotation of the resolver rotor 156R thereby to detect the positions of the magnets 134. To be more concrete, the resolver includes the resolver rotor 156R having the outer peripheral surface of an uneven shape (for example, an elliptical shape or a flower petal shape) and the resolver stator 156S in which two output coils (which phases are electrically different by 90 degrees) and an exciting coil are wound around the core thereof. When an AC voltage is applied to the exciting coil, the two output coils generate the AC voltage according to the change of the length of the gap between the resolver stator 156S and the resolver rotor 156R, with a phase difference therebetween in proportional to the rotation angle. In this manner, the resolver serves to detect the two output voltages having a phase difference. The magnetic pole position of the rotor 130 can be detected by obtaining a phase angle from the phase difference between the two output voltages thus detected. A rear holder 158 is attached to the outer periphery of the rear flange 152R so as to cover the resolver 156.

Each of the U-phase, the V-phase and the W-phase coupled by means of the coupling ring 116 is supplied with electric power from an external battery via the bus bar 117, the power cable 162 and a terminal 163 attached to the tip end of the power cable 162. The bus bar 117 is welded to the coupling ring 116 and drawn to the outside of the motor. The power cable 162 is attached in a manner that the terminal 163 at the tip end thereof is welded to the bus bar 117. A magnetic pole position signal detected by the resolver stator 156S is taken outside by a signal cable 166. The rear holder 158 is attached to the rear flange 152R to protect the resolver 156 and seal the EPS motor 100. The coupling ring 116 and the bus bar 117 are partially molded by the molding material M1 together with the coil end.

Next, the configuration of the stator 110 and the rotor 130 will be explained more in detail based on Figs. 2A and 2B.

Figs. 2A and 2B are sectional diagrams of the motor cut along the line A-A in Fig. 1, wherein Fig. 2B is the enlarged sectional diagram showing a portion P of Fig. 2A. In these figures, like parts corresponding to those of Fig. 1 are marked with the same references and therefore need not be described.

First, the configuration of the stator 110 will be explained. The stator core 112 is configured by a back core 112B of an annular shape and a plurality of teeth 112T which are constituted separately from the back core 112B. The back core 112B is formed in a manner that a thin magnetic plate such as a steel plate is stamped by the pressing and the stamped steel plates are laminated.

In this embodiment, the plurality of teeth 112T are configured by twelve teeth provided independently, that is, 112T (U1 +), 112T (U1 -), 112T (U2 +), 112T (U2 -), 112T (V1 +), 112T (V1 -), 112T (V2 +), 112T (V2 -), 112T (W1 +), 112T (W1 -), 112T (W2 +), 112T (W2 -). The teeth 112T (U1 +), ---, 112T (W2 -) are respectively wound by the stator coils 114 (U1 +), 114 (U1 -), 114 (U2 +), 114 (U2 -), 114 (V1 +), 114 (V1 -), 114 (V2 +), 114 (V2 -), 114 (W1 +), 114 (W1 -), 114 (W2 +), 114 (W2 -) in the concentrated winding manner.

The stator coil 114 (U1 +) and the stator coil 114 (U1 -) are wound in a manner that the currents flow through these coils in opposite directions. The stator coil 114 (U2 +) and the stator coil 114 (U2 -) are also wound in a manner that the currents flow through these coils in opposite directions. In contrast, the stator coil 114 (U1 +) and the stator coil 114 (U2 +) are wound in a manner that the currents flow through these coils in the same direction. The stator coil 114 (U1 -) and the stator coil 114 (U2 -) are also wound in a manner that the currents flow through these coils in the same direction. The relation of the directions of the currents flowing through the stator coils 114 (V1 +), 114 (V1 -), 114 (V2 +) and 114 (V2 -) is same as those of the U-phase and also the relation of the directions of the currents flowing through the stator coils 114 (W1 +), 114 (W1 -), 114 (W2 +), and 114 (W2 -) is same as those of the U-phase.

Since the twelve teeth 112 are fabricated in the same manner and also the stator coils 114 are fabricated in the same manner, the assembling procedure will be explained only as to the teeth 112T (U1 +) and the stator coil 114 (U1 +), for example. The stator coil 114 (U1 +) is a formed coil which is configured in advance so as to have a shape wound around the teeth 112T (U1 +). The stator coil 114 (U1 +) configured as the formed coil is formed together with a bobbin 112BO. The integrated member of the stator coil 114 (U1 +) formed together with the bobbin 112BO is fit into the rear end side of the teeth 112T (U1 +). Since the tip end portion of the teeth 112T (U1 +), that is, the side of the teeth 112T (U1 +) facing on the rotor 130 is enlarged in the circumferential direction, the bobbin 112BO and the stator coil 114 (U1 +) serve as a stopper at the enlarged portion and so are engaged. On the rear end side of the teeth 112T (U1 +), a convex portion 112TT is formed which is configured so as to fit to a concave portion 112BK formed at the inner peripheral side of the back core 112B. The convex portion 112TT of the teeth 112T (U1 +) around which the formed stator coil 114 (U1 +) is wound is pressed into the concave portion 112BK of the back core 112B, whereby the teeth 112T (U1 +) is fixed to the back core 112B. In the similar manner, the process of attaching the stator coils 114 (U1 -), --- , 114 (W2 -) to the other teeth 112T (U1 -), --- , 112T (W2 -) and the process of fixing the teeth 112T (U1 -), --- , 112T (W2 -) to the back core 112B are performed.

In a state where the twelve teeth 112T attached with the stator coils 114 are fixed to the back core 112B and the plural portions on the outer peripheral side of the back core 112B are pressed into the inner peripheral side of the frame 150, the stator core 112 and the stator coils 114 are integrally molded by thermoset resin MR, thereby constituting the stator SubAssy. Incidentally, although, in this embodiment, the explanation is made as to the case where the stator core 112 and the stator coils 114 are integrally molded in the state where the stator core 112 assembled with the stator coils 114 is pressed into the frame 150, the present invention is not limited thereto. That is, the invention may be arranged in a manner that the stator core 112 and the stator coils 114 are integrally molded in a state where the stator coils 114 are assembled into the stator core 112, and thereafter the stator core 112 is pressed into the frame 150.

In the case of performing the mold forming by using the mold material, a not-shown jig is attached to the stator core 112 and the constitutional member formed by the stator core 112 and the frame 150 so that the not-shown jig and the frame 150 surround the stator core 112 and the coil end portions of the stator coils 114 protruding in the axial direction from the axial direction end portion of the stator core 112. Then, the mold material of a liquid state is injected into the space surrounded by the not-shown jig and the frame 150, then the mold material is filled into gaps between the coupling ring 116 and the coil end portion, the coil 112, gaps between the coupling ring 116 and the bus bar 117, gaps of the stator core 112, gaps of the stator coils 114, gaps between stator core 112 and the stator coils 114 and gaps between the stator core 112 and the frame 150, thereby solidifying the mold material. The not-shown jig is removed when the mold material solidified.

The cutting operation is performed for the inner peripheral surface of the stator SubAssy thus molded, that is, the surface of the tip end portion of the teeth 112T (U1 -), ---, 112T (W2 -) opposing to the rotor 130 in the axial direction. Thus, the degree of variance of the gaps between the stator 110 and the rotor 130 can be reduced thereby to further improve the roundness of the inner diameter of the stator 110. Further, since the stator core and the stator coils are integrated by the mold forming, the heat radiation property of the heat generated by flowing the current into the stator coils 114 can be improved as compared with the case where the stator core and the stator coils are not molded. Furthermore, since the stator core and the stator coils are molded, the stator coils and the teeth are prevented from vibrating.

For example, when the gap between the outer periphery of the rotor core of the rotor 130 and the inner periphery of the teeth of the stator 100 is set to 3 mm (3,000 µm), the roundness of the inner diameter of the stator 110 becomes about ± 30 µm due to the manufacturing error of the back core 112B, the manufacturing error of the teeth 112T, the assembling error at the time of the pressing assembling procedure of the back core 112B and the teeth 112T, etc. The roundness of the inner diameter corresponds to 1% of the gap (= 30 µm/3, 000 µm), so that the cogging torque is generated by this roundness of the inner diameter. However, the degree of the cogging torque caused by the roundness of the inner diameter can be reduced by cutting or milling the inner diameter of the stator after the molding process. The steering feeling of the steering wheel can be improved by reducing the degree of the cogging torque.

A convex portion 150T is formed at the inner side of the frame 150. A concave portion 112BO2 is formed at the outer periphery of the back core 112B so as to correspond to the convex portion 150T. The details of the concave portion 112BO2 is shown in Fig. 2B. The convex portion 150T and the concave portion 112BO2 have different curvatures and engage to each other thereby to constitute an engagement portion IP. The eight engagement portions IP are provided with an interval in the circumferential direction and each of which is formed continuously in the axial direction. The engagement portion also serves as the press-into portion. That is, in the case of fixing the stator core 112 to the frame 150, the concave portion 112BO2 of the back core 112B is pressed into the convex portion 150T of the frame 150 so that the protruding end surface of the convex portion 150T of the engagement portion and the bottom surface of the concave portion 112BO2 are welded with a pressure. In this manner, according to the embodiment, the stator core 112 is fixed to the frame 150 by the partial press-into operation. According to this press-into operation, the fine gap is formed between the frame 150 and the stator core 112. In this embodiment, at the time of molding the stator core 112 and the stator coils 114 by the molding material MR, the molding material MR is simultaneously filled into the gap formed between the frame 150 and the stator core 112. Further, the engagement portion also serves as a rotation preventing portion for preventing the stator core 112 from rotating in the peripheral direction with respect to the frame 150.

In this embodiment, since the stator core 112 is partially pressed into the frame 150 in this manner, the degree of the slidability between the frame 150 and the stator core 112 can be made large and the rigidity therebetween can be made small. Thus, in this embodiment, the attenuation effects of noise between the frame 150 and the stator core 112 can be improved. Further, the attenuation effects of noise can be further improved since the molding material is filled at the gap between the frame 150 and the stator core 112.

Alternatively, it may be arranged in a manner that the convex portion 150T and the concave portion 112BO2 are made in a non-contact state thereby to use these members only as a rotation preventing member, and the outer peripheral surface of the back core 112B is pressed into the inner peripheral surface portions of the frame 150 other than the convex portion 150T and the concave portion 112BO2.

The stator coils 114 (U1 +), 114 (U1 -) and the stator coils 114 (U2 +), 114 (U2 -) are disposed at the symmetric positions to each other with respect to the center of the stator 110. That is, the stator coil 114 (U1 +) is disposed in adjacent to the stator coil 114 (U1 -) and also the stator coil 114 (U2 +) is disposed in adjacent to the stator coil 114 (U2 -). Further, the stator coils 114 (U1 +), 114 (U1 -) and the stator coils 114 (U2 +), 114 (U2 -) are disposed in a line-symmetric manner to each other with respect to the center of the stator 110. That is, the stator coil 114 (U1 +) and the stator coil 114 (U2 +) are disposed in the line-symmetric manner to each other with respect to a dotted line C - C passing through the center of the shaft 138. Further, also the stator coil 114 (U1 -) and the stator coil 114 (U2 -) are disposed in the line-symmetric manner.

Similarly, the stator coils 114 (V1 +), 114 (V1 -) and the stator coils 114 (V2 +), 114 (V2 -) are disposed in the line-symmetric manner to each other. Further, similarly, the stator coils 114 (W1 +), 114 (W1 -) and the stator coils 114 (W2 +), 114 (W2 -) are disposed in the line-symmetric manner to each other.

Further, the adjacent stator coils 114 of the same phase are wound by a single wire continuously. That is, the stator coils 114 (U1 +) and 114 (U1 -) are configured in a manner that a single wire is wound continuously to constitute two winding coils, then these two winding coils are inserted into the teeth and then wound around the teeth. Also, the stator coils 114 (U2 +) and 114 (U2 -) are configured by winding a single wire continuously. Similarly, the stator coils 114 (V1 +) and 114 (V1 -) are configured by winding a single wire continuously. Also, the stator coils 114 (V2 +) and 114 (V2-) are configured by winding a single wire continuously. Further, the stator coils 114 (W1 +) and 114 (W1 -) are configured by winding a single wire continuously. Also, the stator coils 114 (W2 +) and 114 (W2 -) are configured by winding a single wire continuously.

According to such a line-symmetric arrangement and the single wire winding of the adjacent two coils of the same phase, the configuration of the coupling rings can be made simple at the time of coupling the coils of the same phase and the coils of the different phases by the coupling rings.

Next, the configuration of the rotor 130 will be explained. The rotor 130 includes the rotor core 132, the ten magnets 134 (134A, 134B, 134C, 134D, 134E, 134F, 134G, 134H, 134I, 134J) which are fixed to the surface of the rotor core 132 by means of adhesive agent, and the magnet cover 136 provided at the outer peripheries of the magnets 134. The rotor core 132 is fixed to the shaft 138.

The magnets 134 are magnetized in the radial direction in a manner that when the major surface sides thereof (sides opposing to the teeth 112T of the stator) are magnetized as the positive pole, the rear surface sides thereof (sides adhered to the rotor core 132) are magnetized as the negative pole. Alternatively, the magnets 134 are magnetized in the radial direction in a manner that when the major surface sides thereof (sides opposing to the teeth 112T of the stator) are magnetized as the negative pole, the rear surface sides thereof (sides adhered to the rotor core 132) are magnetized as the positive pole. The magnets 134 are magnetized in a manner that the polarities of the adjacent magnets are alternated in the peripheral direction. For example, when the surface side of the magnet 134A is magnetized with the positive polarity, the surface side of each of the adjacent magnets 134B, 134J is magnetized with the negative polarity. That is, when the surface side of each of the adjacent magnets 134A, 134C, 134E, 134G, 134I is magnetized with the positive polarity, the surface side of each of the adjacent magnets 134B, 134D, 134F, 134H, 134J is magnetized with the negative polarity.

Each of the magnets 134 has a semicylindrical shape in its section. The semicylindrical shape has a structure that the thickness in the radial direction at each of the left and right portion along the peripheral direction is thinner as compared with the thickens in the radial direction at the center portion along the peripheral direction. Since each of the magnets is configured in the semicylindrical shape, the magnetic flux distribution can be made in a sine wave shape. Thus, an induction voltage waveform generated by rotating the EPS motor can be made in a sine wave shape, whereby the pulsation component can be reduced. Since the pulsation component is reduced, the operability of the steering wheel can be improved. Alternatively, magnetic material of a ring shape may be magnetized in a manner of controlling a magnetizing force thereby to form a magnet having the magnetic flux distribution shape similar to a sine wave.

The rotor core 132 is provided with ten through holes 132H each having a large diameter which are disposed on the same circle, and five recesses 132K each having a small diameter which are disposed on the same circle at the inner side of the through holes. The stator core 112 is formed in a manner that a thin plate made of magnetic material such as SUS is stamped by the pressing and the stamped steel plates are laminated. The recess 132K is formed by caulking the thin plate at the time of the pressing. Then, at the time of laminating the thin plates, these recesses 132K are made fit from one another thereby to perform the positioning of these recesses. The through holes 132H are provided so as to reduce the inertia, so that the balance property of the rotor can be improved by the through holes 132H. The outer periphery side of the magnets 134 are covered by the magnet cover 136 so as to prevent the scattering of the magnets 134. The back core 112B and the rotor core 132 are simultaneously formed from the same thin plate by the press punching.

As explained above, the rotor 130 according to the embodiment has ten magnets 134 and ten poles. Further, as described above, twelve teeth 112T are provided and twelve slots are formed among the adjacent teeth. That is, the EPS motor according to the embodiment constitute a synchronous motor of the surface magnet type with ten poles and twelve slots.

The explanation will be made as to the relation between the number P of the poles and the number S of the slots in the AC motor with reference to Fig. 3.

Fig. 3 is an explanatory diagram showing the relation between the number P of the poles and the number S of the slots in the AC motor.

In Fig. 3, each of areas hatched by horizontal lines represents the combination of the pole number P and the lot number S capable of being realized as the AC motor (brushless motor) of a three phase. That is, as the AC motor of a three phase, there are the combinations of two poles and three slots, four poles and three slots, four poles and six slots, six poles and nine slots, eight poles and six slots, eight poles and nine slots, eight poles and twelve slots, ten poles and nine slots, ten poles and twelve slots, and ten poles and fifteen slots. Among these combinations, the combination of ten poles and twelve slots shown by oblique lines inclined right downward direction and oblique lines inclined left downward direction is the combination of the pole number and the slot number according to the embodiment. The combinations of eight poles and nine slots and ten poles and nine slots shown by the oblique lines inclined left downward direction will be explained later. The EPS motor shown in Fig. 1 is a small motor with an outer diameter of 85Φ. In such a small motor, since it is impossible to realize a motor with the pole number N of twelve or more, such combinations are omitted in Fig. 3.

Here, since the AC motors with the combinations of two poles and three slots, four poles and three slots, four poles and six slots, six poles and nine slots, eight poles and six slots, eight poles and twelve slots, and ten poles and fifteen slots are similar in their characteristics, the explanation will be made as to the motor of six poles and nine slots, as an representative example.

As compared with the AC motor of six poles and nine slots, the AC motor of ten poles and twelve slots according to the embodiment can increase the utilization factor of the magnetic fluxes of the magnets. That is, since the turns factor (utilization factor of the winding) kw of the AC motor of six poles and nine slots is 0.87 and the skew factor ks thereof is 0.96, the utilization factor (kw■ ks) of the magnetic fluxes of the magnets is 0.92. Thus, the utilization factor (kw■ ks) of the magnetic fluxes of the magnets can be made high in the AC motor of ten poles and twelve slots.

Further, since the period of the cogging torque is the least common multiple of the pole number P and the slot number S, the period of the cogging torque of the AC motor of six poles and nine slots is 18. In the AC motor of ten poles and twelve slots according to the embodiment, the period of the cogging torque can be made 60, whereby the cogging torque can be reduced.

Further, the cogging torque due to the error of the roundness of the inner diameter can be made small. That is, supposing that the cogging torque due to the error of the roundness of the inner diameter of the AC motor of six poles and nine slots is 3.7, the cogging torque of the AC motor of ten poles and twelve slots according to the embodiment can be made 2.4, whereby the cogging torque due to the error of the roundness of the inner diameter can be reduced. Further, in this embodiment, since the inner diameter of the stator SubAssy having been molded is cut or milled to improve the roundness of the inner diameter of the AC motor, the cogging torque due to the error of the roundness of the inner diameter can be made smaller.

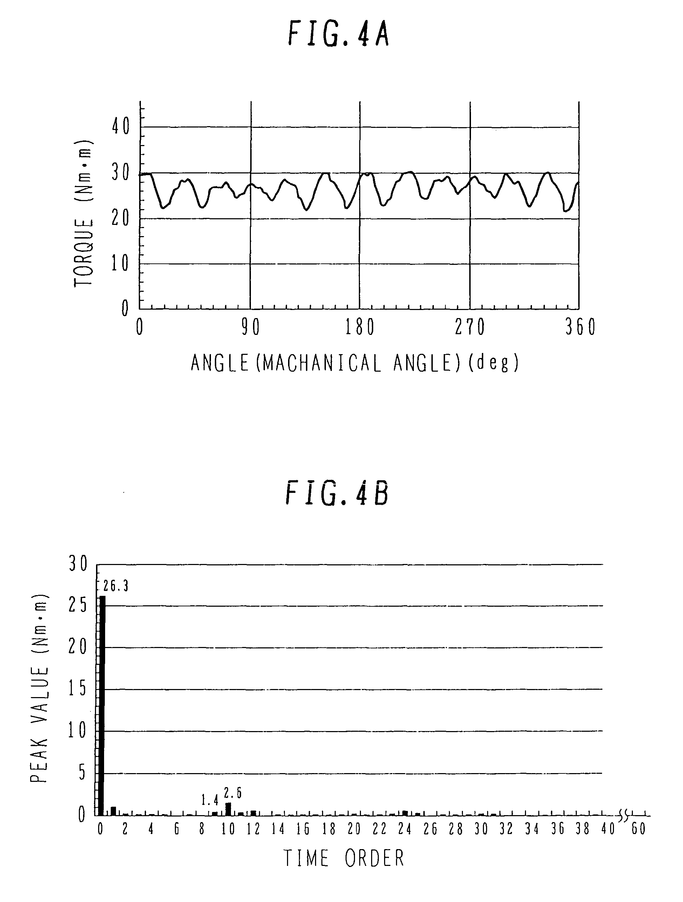

The explanation will be made as to the actual measurement value of the cogging torque in the motor for an electrically driven power steering according to the embodiment with reference to Figs. 4A and 4B.

Figs. 4A and 4B are a diagram for explaining the actual measurement value of the cogging torque in the motor for an electrically driven power steering according to the embodiment.

Fig. 4A shows cogging torques (mNm) actually measured in a range of 360 degrees, that is, a range of 0 to 360 degree of the mechanical angle. Fig. 4B shows peak values (mNm) of the harmonic components of the cogging torques shown in Fig. 4A in which the peak values of the harmonic components are separately represented at each time order. The time order 60 corresponds to the period of the cogging torque in the AC motor of ten poles and twelve slots, as described above, and the cogging torque being generated at the time order 60 is almost 0. The cogging torque being generated at the time order 12 is due to the variance of the magnetic field forces of the magnets of ten poles. Since each of the magnets is configured in the semicylindrical shape as described above, the peak value of the cogging torque being generated due to the variance of the magnetic field forces of the magnets can be reduced to 1.4. The cogging torque being generated at the time order 10 is due to the variance of the teeth of the stator with the twelve slots. Since the inner diameter of the stator SubAssy having been molded is cut or milled thereby to improve the roundness of the inner diameter of the AC motor, the peak value of the cogging torque due to the variance of the teeth can be reduced to 2.6

The harmonic component of the cogging torque at the time order 0 represents a DC component and the torque in this state is a so-called loss torque (a friction torque generated when the rotation speed is almost 0). The loss torque can also be reduced to 26.3 mNm. Thus, even when a driver detaches the hands from the steering wheel, since the loss torque is smaller than the restoring force of the steering wheel restoring to the straightly running direction, the restoring property of the steering wheel is improved.

As described above, since the respective cogging torque components are reduced, the cogging torque can be reduced to 9 mNm as shown in Fig. 4A. Since the maximum torque of the EPS motor is 4.5 Nm, the cogging torque can be made a small rate of 0.2 % (= 9 mNm / 4.5 Nm) (that is, equal to or less than 3 / 1000 of the rated value). Further, the loss torque can also be made a small rate of 0.57 % (= 26.3 mNm / 4.5 Nm).

The EPS motor 100 according to the embodiment uses a vehicle mounted battery (output voltage of the battery is 12 volt) as a power supply. The EPS motor 100 is attached to a position near the steering wheel or the rack of a rack-and-pinion for transmitting the rotation force of the steering wheel. Thus, the motor is required to be miniaturized due to the limitation of the attachment position. On the other hand, a large torque (for example, 4.5 Nm) is required in order to assist the power for the steering wheel.

In order to obtain a required torque from the AC servo motor which is driven by the power supply of AC 100 volt, the required motor current is almost 5 ampere. However, in the case of driving the motor with AC 14 volt which is obtained through the DC/AC conversion of DC 14 volt, the motor current is required to be in a range of 70 to 100 ampere in order to obtain the almost same torque by the motor with the almost same volume. In order to flow such a large current, the stator coil 114 is required to have a large diameter of 1.6 Φ. In this case, the number of turns of the stator coil 114 is 14. The number of turns of the stator coil 114 is in a range of 9 to 21, for example, although it depends on the diameter of the stator coil 114. The number of turns of the stator coil 114 is 9 when the diameter of the stator coil 114 is 1.8 Φ. The space factor of the coils can be improved to 75%, for example, when the coil with a diameter of 1. 6 Φ is wound as compared with the coil with a diameter of 1.8 Φ is wound. In this case, since the space factor can be made large, the current density of the conductor can be made small relatively. As a result, the copper loss can be reduced, the increase of the motor temperature can be suppressed and the rotation speed/torque characteristics can be improved. In recent years, there are electrically driven vehicles each mounting a battery of 42 volt thereon. In such a vehicle, since a motor current can be made small, the number of turns of the stator coil 114 is in a range of 20 to 30.

In the adjacent teeth 112T, the interval W1 of the enlarge portions of the tip ends (on the sides opposing to the rotor 130) of the teeth 112T (for example, the interval W1 (the peripheral direction interval at the portions most adjacent in the peripheral direction) of the enlarge portions between the teeth 112T (U1 -) and the teeth 112T (W1 -)) the tip ends of the teeth 112T is set to 1 mm. When the interval of the teeth is made small in this manner, the cogging torque can be reduced. Further, even if vibration is applied to the motor, since the diameter of the stator coils 114 is larger than the interval W1, the stator coils 114 are prevented from falling on the rotor side from the space between the teeth. The interval W1 of the adjacent teeth is preferably in a range of 0.5 to 1.5 mm which is less than the diameter of the stator coils 114, for example. In this manner, according to the embodiment, the interval W1 of the adjacent teeth is set to be equal to or less than the diameter of the stator coils 114.

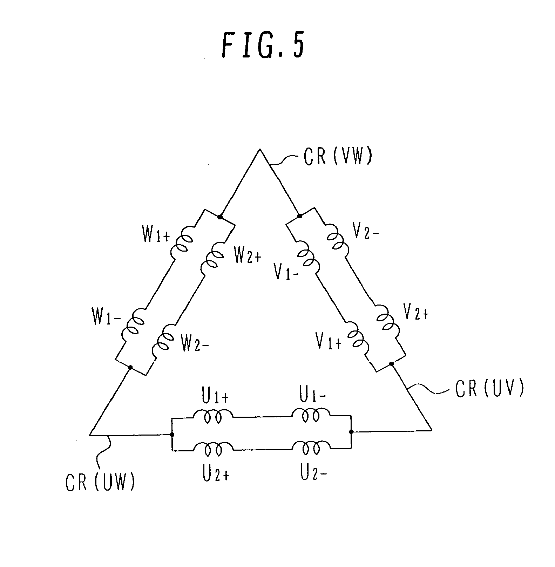

Next, the explanation will be made as to the coupling relation of the stator coils in the motor for an electrically driven power steering according to the embodiment with reference to Fig. 5.

Fig. 5 is a diagram showing the coupling relation of the stator coil in the motor for an electrically driven power steering according to the embodiment.

In Fig. 5, the coil U1 + shows the stator coil 112T (U1 +) shown in Fig. 2. The coils U1 -, U2 +, U2 -, V1 +, V1 -, V2 +, V2 -, W1 +, W1 -, W2 +, W2 - show the stator coils 112T (U1 -), ----, 112T (W2 -) shown in Fig. 2, respectively.

The stator coils of U-, V- and W-phase according to the embodiment are coupled to form a delta connection. The stator coils of each of the respective phases form a parallel circuit. That is, as to the U-phase, the series circuit of the coil U1 + and the coil U1 - is coupled in parallel to the series circuit of the coil U2 + and the coil U2 -. In this case, the coil U1 + and the coil U1 - are configured by winding a single coil continuously. The coils of each of the V-phase and the W-phase are configured in the same manner.

Although the stator coils may be coupled to form a star connection, the terminal voltage of the delta connection can be made small as compared with the star connection. For example, when the voltage across both the terminals of the series-parallel circuit of the U-phase is E volt, terminalvoltageisE. In contrast, the voltage of the star connection is √3E in this case. In the case of the delta connection, since the terminal voltage can be made small, the number of turns of the coil can be made large and so the coil with a thin thickness can be used. Further, in the delta connection, since the parallel circuit is employed, the current value flowing into the respective coils can be made small as compared with the series connection of the four coils, whereby the coil with a thin thickness can be used. Thus, the space factor of the coils can be increased, then the coil is likely bend and the fabrication performance can be improved.

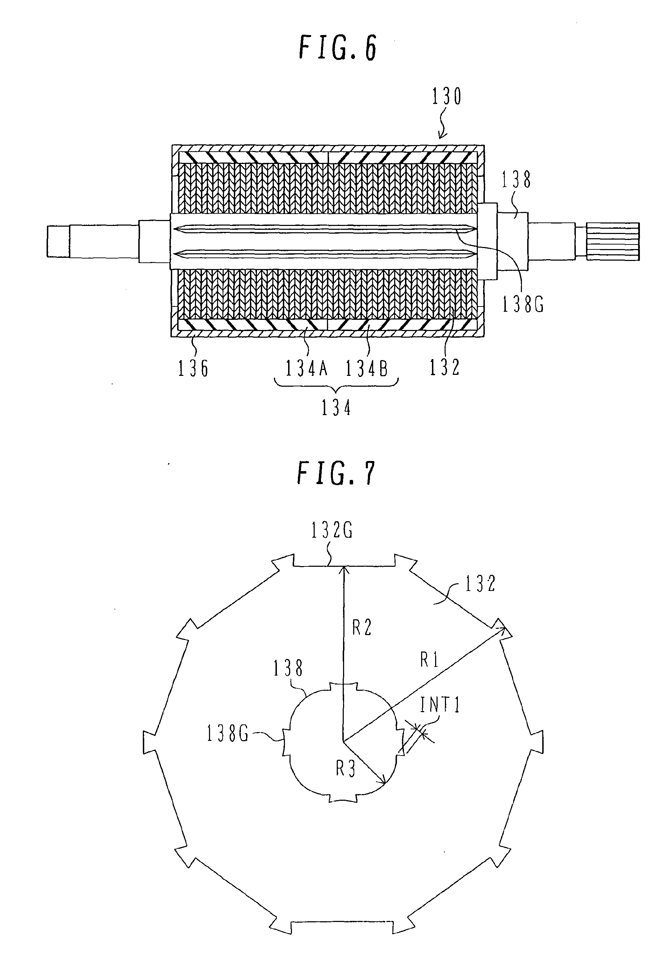

Next, the explanation will be made as to the configuration of the rotor used in the motor for an electrically driven power steering according to the embodiment with reference to Figs. 6 and 7.

Fig. 6 is a cross sectional diagram showing the configuration of the rotor used in the motor for an electrically driven power steering according to the embodiment. Fig. 7 is an enlarged cross sectional diagram showing the configuration of the coupling portion between the core and the shaft of the rotor used in the motor for an electrically driven power steering according to the embodiment. In these figures, like parts corresponding to those of Figs. 1 and 2 are marked with the same references and therefore need not be described.

As shown in Fig. 6, the rotor 130 is configured by the rotor core 132 configured by the magnetic material which is formed by laminating the silicon steel plates, the magnets 134 each configured by a permanent magnet fixed to the surface of the rotor core 132 by means of adhesive agent, the magnet cover 136 formed by non-magnetic material provided at the outer periphery of the magnets 134, and the shaft 138.

The rotor core 132 is configured by laminating many core plates each formed by the thin steel plate being stamped by the pressing. Each of the core plates is provided with five recesses. The laminated core plates are positioned in a manner that the recesses of the core plates are fit from one another and then the laminated core plates are caulked and jointed integrally, thereby forming the rotor core 132.

Each of the magnets134 is divided into two pieces along the axial direction, that is, a magnet 134A and a magnet 134B. This is because a long magnet is difficult to manufacture, the magnet is divided along the axial direction. Alternatively, the magnet 134A and the magnet 134B may be disposed so as to deviate in the peripheral direction of the rotor core 132. In this case, the similar effects obtained in the case of skewing the magnets can be obtained.

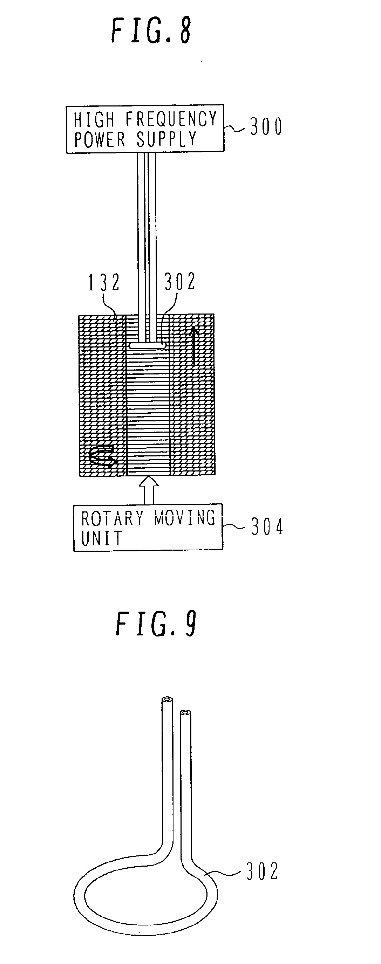

Eight coinings (projections) 138G extending in the axial direction are formed at the outer periphery of the shaft 138. On the other hand, a through hole is provided within the rotor core 132. The surface portion of the through hole is partially annealed by a method explained later with reference to Figs. 8 to 11. The shaft 138 is pressed into the through hole, then the eight coinings (projections) 138G formed at the shaft 138 bite into the through hole of the rotor core 132 and fastened thereto. As a result, the torque strength in the rotation direction of the shaft 138 is secured and the drawing-out strength in the axial direction is also secured.

As the material of the shaft 138, SCM435 is used, for example. SCM435 is higher in the hardness than that of the silicon steel plate which is the material of the rotor core 132. However, in the case where the difference of the hardness between SCM435 and the silicon steel plate is small, when the shaft 138 is pressed into the through hole, the baking occurs between the eight coinings (projections) 138G and the rotor core 132 and hence the coupling accuracy such as the coaxial accuracy degrades. Thus, it is required to harden or quench the shaft in order to increase the hardness of the shaft 138, or to anneal the rotor core 132 in order to lower the hardness of the rotor core 132. In this embodiment, only the surface portion of the through hole of the rotor core 132 is locally annealed by the method described later with reference to Figs. 8 to 11. Thus, the thermal deformation of the shaft caused by the hardening or quenching of the shaft can be eliminated. Also, in the case of annealing the entirety of the rotor core, the metal rolling deformation at the time of manufacturing the steel plate and the process deformation at the time of press punching can be eliminated. Further, since the problems of the rotor core and the shaft are eliminated in this manner, the motor of an electrically driven power steering using the rotor according to the embodiment can improve its rotation balance, so that the noise and the vibration can be reduced.

As shown in Fig. 7, when the shaft 138 is pressed into the through hole formed at the inner periphery of the rotor core 132, the eight coinings (projections) 138G formed at the shaft 138 bite into the through hole of the rotor core 132 and fastened thereto. In this case, the bite-into amount INT1 is in a rage of 0.1 to 0.15 mm. The areas of the through hole at the inner periphery of the rotor core 132 in which the coinings 138G of the shaft bite are locally subjected to the annealing processing. In this case, for example, the radius R1 of the rotor core 132 is 18 mm and the inner diameter R3 of the through hole is 6.85 mm. The rotor core 132 is configured by laminating 180 silicon steel plates each having a thickness of 0.35 mm. The length of the rotor core 132 in the axial direction is 63 mm.

Ten recesses 132G are formed in the peripheral direction at the outer periphery of the rotor core 132. The magnets 134 are fixed to the recesses 132G by means of adhesive agent etc. A radius R2 of the recess 132G to the bottom portion thereof is 17 mm.

Next, the explanation will be made as to the method of locally annealing the rotor used in the motor for an electrically driven power steering according to the embodiment with reference to Figs. 8 to 11.]

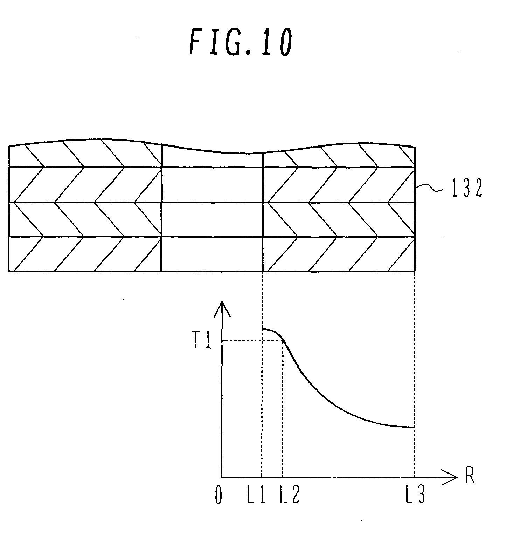

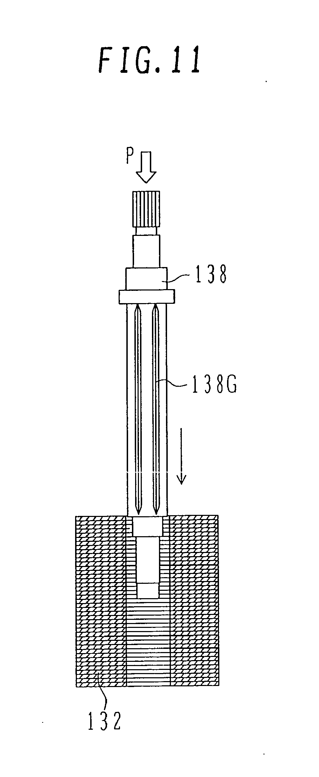

Fig. 8 is a diagram for explaining a local heating device for the rotor used in the motor for an electrically driven power steering according to the embodiment. Fig. 9 is a perspective view of an induction heating coil which is used for the local heating of the rotor used in the motor for an electrically driven power steering according to the embodiment. Fig. 10 is a diagram showing the temperature profile at the time of locally heating the rotor used in the motor for an electrically driven power steering according to the embodiment. Fig. 11 is an explanatory diagram at the time of coupling the rotor used in the motor for an electrically driven power steering according to the embodiment.

As shown in Fig. 8, an induction heating coil 302 is inserted into the through hole of the rotor core 132, and only the portion near the through hole of the rotor core 132 is heated by heating the induction heating coil 302 with a high frequency power supplied from a high frequency power supply 300, thereby annealing the portion.

The rotor core 132 is configured in a manner that many core plates each formed by punching a thin steel plate by the pressing are laminated and jointed integrally by the caulking. Thus, the inner diameter portion and the outer periphery of the core plate are hardened by the press punching, and so the core plate increases its hardness and has deformation due to the plastic deformation. Further, the base material itself of the thin steel plate has deformation due to the rolling process etc. at the manufacturing process.

Thus, with respect to the rotor core 132 having been deformed and hardened, only the portion near the through hole of the rotor core 132 is heated and annealed by using the induction heating coil 302.

As shown in Fig. 9, the induction heating coil 302 is formed by a coil of one turn. This is because the inner diameter of the rotor core 132 is relatively small (for example, the diameter of 13.7ϕ) and the induction heating coil 302 is required to be hollow so as to flow the coolant therethrough, so that it is difficult to wind the coil in multiplex.

Since the induction heating coil 302 has a single turn, at the time of the annealing using the high-frequency power, as shown in Fig. 8, a rotary moving unit 304 rotates the rotor core 132 around the axis of the through hole of the rotor core 132 and also moves the rotor core 132 in the axial direction, whereby the induction heating coil 302 approaches the entire periphery and the entire area in the axial direction of the inner periphery of the through hole of the rotor core 132 to apply heat thereto.

Next, the explanation will be made as to the heating condition with reference to Fig. 10. Supposing that the center position of the through hole of the rotor core 132 is 0, the temperature profile in the radial direction R is shown in Fig. 10.

Supposing that L1 = 6.85 mm and L3 = 18 mm, the heating operation is performed in a manner that the temperature at the position of the radius R2 is equal to or more than T1. Since the material of the rotor core 132 is the silicon steel plates, the temperature T1 is set to 727□ which is the recrystallization temperature of the iron material. Further, L2 is set to 7.0 mm or more so that the bite-into amount of the coinings of the shaft with respect to the through hole of the rotor core described with reference to Fig. 7 is in the rage of 0.1 to 0.15 mm.

As described above, in order to locally heat only the portion near the surface of the through hole of the rotor core to the recrystallization temperature or more, the high-frequency power supply with a voltage of 15 kV, a current of 3A and a high-frequency of 250 kHz is used. Further, the rotary moving unit 304 is rotated at three revolutions / second and the moving speed of the rotor core in the axial direction is set to 6 mm / second. Since the time period required for locally heating the rotor core 132 is about 11 seconds, the local annealing can be performed in a quite short time.

Incidentally, since the portion near the surface of the through hole of the rotor core which corresponds to the bite-into amount of the coinings of the shaft in the rage of 0.1 to 0.15 mm is required to be heated to the recrystallization temperature or more, the high-frequency power supply with a voltage in a range of 0 to 20 kV, a current in a range of 2 to 5 A and a high-frequency in a range of 100 to 400 kHz may be used. Although depending on the heating power of the high-frequency power supply, the rotation speed of the rotor core by the rotary moving unit 304 can be set in a range of 1 to 5 revolutions / second and the moving speed of the rotor core in the axial direction can be set in a range of 3 to 10 mm / second.

In this manner, only the area (the area from L1 to L2) near the surface of the through hole of the rotor core 132 is heated by the high-frequency power to heat to the recrystallization temperature or more thereby to anneal the area. Thus, only the area near the surface of the through hole at which the deformation appears by the press punching and the hardness increases is softened, but the deformation of the outer periphery of the rotor core 132 and the thin steel plate are not cancelled, whereby amount of the deformation is small. That is, the accuracy almost same as that of the rotor core having been press-punched and fastened can be maintained.

Then, as shown in Fig. 11, the shaft 138 is pressed, by the oil press etc., into the through hole of the rotor core 132 having been annealed locally by the method of Fig. 8, thereby to joint the shaft 138 and the rotor core 132.

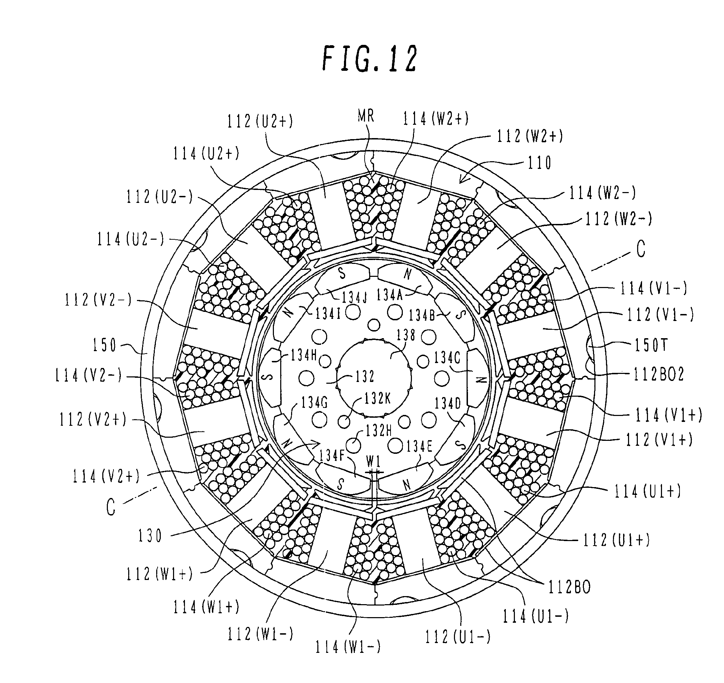

Next, the explanation will be made as to another example of the configuration of the stator 110. Fig. 12 is a sectional diagram cut along a line A - A in Fig. 1. In the figure, like parts corresponding to those of Fig. 1 are marked with the same references and therefore need not be described.

In the stator 110 shown in Fig. 2, the stator core 112 is configured by the back core 112B of an annular shape and a plurality of the teeth 112T which are configured separately from the back core 112B. In contrast, in this example, the stator core 112 is configured by twelve T-shaped teeth integration type divided back cores 112 (U1 +), 112 (U1 -), 112 (U2 +), 112 (U2 -), 112 (V1 +), 112 (V1 -), 112 (V2 +), 112 (V2 -), 112 (W1 +), 112 (W1 -), 112 (W2 +), 112 (W2 -). That is, the back core 112B of an annular shape in Fig. 2 is divided into twelve pieces in the peripheral direction in this case. Then, a teeth is integrally attached to each of the divided pieces of the back core. Each of the teeth integration type divided back cores 112 (U1 +),---, 112 (W2 -) is configured in a manner that a thin plate of magnetic material such as a silicon steel plate is punched by the pressing and the thin plates thus punched are laminated. The configuration of the rotor 130 is same as that of Fig. 2.

In the teeth portions of the teeth integration type divided back cores 112 (U1 +),---, 112 (W2 -), stator coils 114 (U1 +), 114 (U1 -), 114 (U2 +), 114 (U2 -), 114 (V1 +), 114 (V1 -), 114 (V2 +), 114 (V2 -), 114 (W1 +), 114 (W1 -), 114 (W2 +), 114 (W2 -) are wound around separately provided twelve teeth 112T (U1 +), ---, 112T (W2 -) in the concentrated winding manner, respectively. The winding directions etc. of the stator coils 114 (U1 +),---, 114 (W2 -) are same as those of Fig. 2.

The stator coils 114 (U1 +),---, 114 (W2 -) are wound around the teeth integration type divided back cores 112 (U1 +),---, 112 (W2 -), respectively. Then, each of concave portions formed at the one end faces in the peripheral direction of the teeth integration type divided back cores 112 (U1 +),---, 112 (W2 -) is pressed into a convex portion, having a fitting shape with respect to the concave portion, formed at the other end face in the peripheral direction of the adjacent teeth integration type divided back core, thereby to complete the assembling of the stator 110. Next, in a state where the plural portions on the outer peripheral side of the back core 112B are pressed into the inner peripheral side of the frame 150, the stator core 112 and the stator coils 114 are integrally molded by the thermoset resin MR, thereby constituting the stator SubAssy. Incidentally, although, in this embodiment, the explanation is made as to the case where the stator core 112 and the stator coils 114 are integrally molded in the state where the stator core 112 assembled with the stator coils 114 is pressed into the frame 150, the present invention is not limited thereto. That is, the invention may be arranged in a manner that the stator core 112 and the stator coils 114 are integrally molded in a state where the stator coils 114 are assembled into the stator core 112, and thereafter the stator core 112 is pressed into the frame 150.

In the case of performing the mold forming by using the mold material, a not-shown jig is attached to the stator core 112 and the constitutional member formed by the stator core 112 and the frame 150 so that the not-shown jig and the frame 150 surround the stator core 112 and the coil end portions of the stator coils 114 protruding in the axial direction from the axial direction end portion of the stator core 112. Then, the mold material of a liquid state is injected into the space surrounded by the not-shown jig and the frame 150, then the mold material is filled into the coil end portion, gaps of the stator core 112, gaps of the stator coils 114, gaps between stator core 112 and the stator coils 114 and gaps between the stator core 112 and the frame 150, thereby solidifying the mold material. The not-shown jig is removed when the mold material solidified.

The cutting operation is performed for the inner peripheral surface of the stator SubAssy thus molded, that is, the surface of the tip end portion of the teeth of the teeth integration type divided back cores 112 (U1 +),---, 112 (W2 -) opposing to the rotor 130 in the axial direction. Thus, the degree of variance of the gaps between the stator 110 and the rotor 130 can be reduced thereby to further improve the roundness of the inner diameter of the stator 110. Further, since the stator core and the stator coils are integrated by the mold forming, the heat radiation property of the heat generated by flowing the current into the stator coils 114 can be improved as compared with the case where the stator core and the stator coils are not molded. Furthermore, since the stator core and the stator coils are molded, the stator coils and the teeth are prevented from vibrating. Further, since the inner surface of the stator is subjected to the cutting operation after having been molded, the magnitude of the cogging torque based on the roundness of the inner diameter of the stator can be improved. Since the magnitude of the cogging torque is reduced, the steering feeling of the steering wheel can be improved.

A convex portion 150T is provided at the inside of the frame 150. A concave portion 112BO2 is formed at the outer periphery of the back core 112B so as to correspond to the convex portion 150T. The convex portion 150T and the concave portion 112BO2 have different curvatures so as to engage to each other thereby to constitute an engagement portion IP. Each of the IP portions is formed continuously in the axial direction and the eight IP portions are provided in the peripheral direction with an interval. The engagement portion also serves as a press-in portion. That is, in the case of fixing the stator core 112 to the frame 150, the concave portion 112BO2 of the back core 112B is pressed into the convex portion 150T of the engagement portion so that the protruding end surface of the convex portion 150T of the engagement portion is made in contact with pressure to the bottom surface of the concave portion 112BO2. In this embodiment, the stator core 112 is fixed to the frame 150 by the partial press-into operation in this manner. A fine gap is formed between the stator core 112 and the frame 150 by this press-into operation. In this embodiment, at the time of molding the stator core 112 and the stator coils 114 by the molding material MR, the molding material MR is simultaneously filled into the gap formed between the frame 150 and the stator core 112. Further, the engagement portion also serves as a rotation preventing portion for preventing the stator core 112 from rotating in the peripheral direction with respect to the frame 150.

In this embodiment, since the stator core 112 is partially pressed into the frame 150 in this manner, the degree of the slidability between the frame 150 and the stator core 112 can be made large and the rigidity therebetween can be made small. Thus, in this embodiment, the attenuation effects of noise between the frame 150 and the stator core 112 can be improved. Further, the attenuation effects of noise can be further improved since the molding material is filled at the gap between the frame 150 and the stator core 112.

Alternatively, it may be arranged in a manner that the convex portion 150T and the concave portion 112BO2 are made in a non-contact state thereby to use these members only as a rotation preventing member, and the outer peripheral surface of the back core 112B is pressed into the inner peripheral surface portions of the frame 150 other than the convex portion 150T and the concave portion 112BO2.

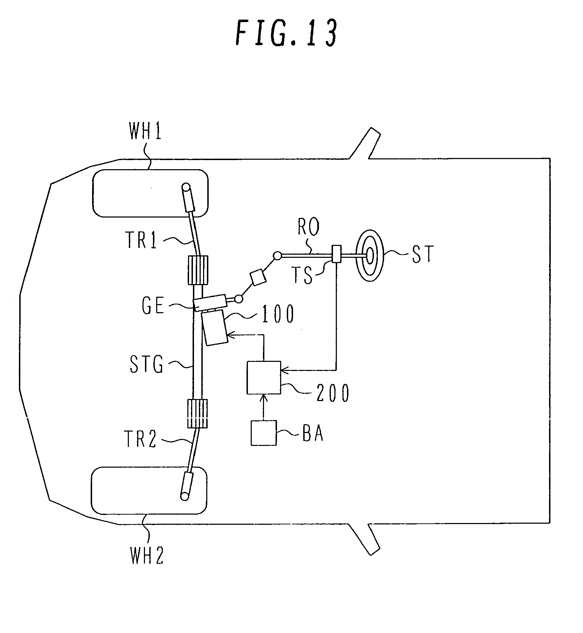

Next, the explanation will be made as to the system configuration of the electrically driven power steering using the motor for an electrically driven power steering according to the embodiment with reference to Fig. 13.

Fig. 13 is the system configuration diagram showing the configuration of the electrically driven power steering using the motor for an electrically driven power steering according to the embodiment.

When a steering wheel ST is rotated, the rotation driving force thereof is reduced by a manual steering gear STG via a rod RO, then transmitted to left and right tie rods TR1, TR2, and then further transmitted to left and right wheels WH1, WH2 thereby to steer the left and right wheels WH1, WH2, respectively.

The EPS motor 100 according to the embodiment is attached near the manual steering gear STG and transmits the driving force to the manual steering gear STG via a gear GE. A torque sensor TS is attached to the rod RO and detects a rotation driving force (torque) applied to the steering wheel ST. A control device 200 controls a current supplied to the EPS motor 100 based on the output of the torque sensor TS so that the outputs torque of the EPS motor 100 becomes a target torque. The control device 200 and the EPS motor 100 are fed by a battery BA.

Although the explanation is made as to the rack type power steering in which the EPS motor is provided near the rack-and-pinion, the present invention is not limited thereto. The EPS motor 100 according to the embodiment can also be applied to a column type power steering in which the EPS motor is provided near the steering wheel.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A rotor comprising:
a rotor core (132) which is formed by laminating a plurality of metal plates and has a through hole at a center thereof; and
a shaft (138) which is pressed into the through hole of the rotor core (132), wherein
the rotor core (132) is locally annealed only at an area near a surface of the through hole.

2. A rotor comprising:
a rotor core (132) which is formed by laminating a plurality of metal plates and has a through hole at a center thereof; and
a shaft (138) which is pressed into the through hole of the rotor core (132), wherein
a plurality of coupling coinings (138G) are formed in a longitudinal direction at an outer periphery of the shaft (138), and
the rotor core (132) is locally annealed at an area which is near a surface of the through hole and at which the coinings (138G) bite into the rotor core (132) when the shaft is pressed into the through hole of the rotor core (132).

3. A rotor according to claim 1 or 2, wherein
the rotor core (132) is configured in a manner that each of a plurality of silicon steel plates is punched by a pressing process to form a thin plate of a predetermined shape and a plurality of the thin plates of the predetermined shape are laminated.

4. A rotor according to claim 1, 2 or 3, wherein
the shaft (138) is made of material harder than the rotor core (132).

5. A rotor according to any of the preceding claims, wherein
the annealing is performed in a manner that the area is heated to a recrystallization temperature of the rotor core (132) or more.

6. A method of manufacturing a rotor in a manner that a shaft is pressed into a rotor core (132) which is formed by laminating a plurality of metal plates and has the through hole at a center thereof, comprising the steps of:
punching each of the plurality of metal plates by a pressing process to form a plurality of metal plates each having a predetermined shape;
laminating the plurality of the metal plates of the predetermined shape to form the rotor core (132);
locally heating only at an area near a surface of the through hole passing through the center of the rotor core (132) to a recrystallization temperature of the rotor core (132) or more to anneal the area; and
pressing the shaft (138) into the through hole of the rotor core (132).

7. A method of manufacturing a rotor according to claim 6, wherein
the step of locally heating is performed by inserting a high-frequency heating coil within the through hole of the rotor core (132).

8. A method of manufacturing a rotor according to claim 7, wherein
the high-frequency heating coil is a coil of one turn, and
the step of locally heating is performed by moving the high-frequency heating coil in an axial direction of the rotor core (132) while rotating the rotor core.

9. A motor for an electrically driven power steering, comprising:
a stator (110); and
a rotor (130) which is disposed so as to oppose to the stator (110) through a gap and is supported rotatably, wherein
the rotor (130) including:
a rotor core (132) which is formed by laminating a plurality of metal plates and has a through hole at a center thereof; and
a shaft (138) which is pressed into the through hole of the rotor core (132), wherein
the rotor core (132) is locally annealed only at an area near a surface of the through hole.

10. A motor for an electrically driven power steering according to claim 9, wherein the rotor (130) further includes;
a plurality of magnets (134) fixed to a surface of the rotor core (132); and
a cover (136) attached so as to cover an outer periphery of the magnets (134).
